Europäisches Patentamt

European Patent Office

Office européen des brevets

(19)

(11) Publication number: **0 207 996**
**A1**

## EUROPEAN PATENT APPLICATION

published in accordance with Art. 158(3) EPC

(12)

(21) Application number: 86900270.9

(22) Date of filing: 25.12.85

Data of the international application taken as a basis:

(86) International application number:
PCT/JP85/00711

(87) International publication number:
WO86/03899 (03.07.86 86/14)

(51) Int. Cl.⁴: **H 02 K 3/26**
**H 02 K 15/04, H 02 K 21/24**

(30) Priority: 25.12.84 JP 271847/84

(43) Date of publication of application:
14.01.87 Bulletin 87/3

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: OYAMA, Shigeaki
939-82, Katakura-cho
Hachioji-shi Tokyo 192(JP)

(74) Representative: Altman, Peter John et al,
MARKS & CLERK Suite 301 Sunlight House Quay Street
Manchester M3 3JY(GB)

(54) **SYNCHRONOUS MOTOR.**

(57) A disc-type motor has disc-like rotor elements and disc-like stator elements that are arranged alternatingly in the axial direction of the motor. The armature winding of the disc-like stator element consists of a first winding element (A) in the form of spirals and a second winding element (B) in the form of spirals complementary to the spiral form of the first winding element. Each of the winding elements is arranged in spiral groove portions of the other winding element.

Fig.1

EP 0 207 996 A1

0207996

<u>SPECIFICATION</u>

TITLE OF THE INVENTION

Electric Synchronous Motor

TECHNICAL FIELD

The present invention relates to an electric synchronous motor, more specifically, to an electric synchronous motor having a stator constituted by disk-like stator elements which extend perpendicularly to the axis of the motor, and armature windings secured on the disk-like stator elements parallel to the surfaces thereof in a helical pattern.

BACKGROUND ART

With the improvement of the material of the permanent magnet, the advantages of the alternating servomotor have been noted. There is one type of alternating servomotor using the permanent magnets, having a stator and a rotor formed in a disk-like shape, these stator and rotor being axially alternatingly arranged in a facing relationship. Permanent magnets are mounted on the rotor, and armature windings are secured on the stator in a helical pattern. As an example of such a type of motor, "Applied Mechanical Engeneering, 1983, May "describes a small flat motor. In this description, a group of coils in the shape of a round slice of an orange as an armature winding is formed on the surface of the stator by photoetching.

The conventional disk-type motor of the above-described type is mainly used as a driving means for audio instruments. Considering that the armature winding is formed by photoetching, such a disk-type motor provides only a small output power, and such a motor can not be adapted for an actuator for, for example, an industrial robot, which requires a relatively large output power. However, such a disk-type motor has advantages in that it has a simple construction and can be manufactured in a relatively small size, and thus it is expected that the use thereof will rapidly increase. To obtain a large output power, the thickness of the stator disk should practically be as small as possible, and a large electric current can be supplied to the armature winding secured on the stator disk. There is, however, a problem in that to supply a great electric current to the armature winding the thickness of the stator disk must be necessarily great. That is, it is possible for the stator disk to be thin if the armature winding is formed by photoetching as in the prior art, but the electric current to be flowed is restricted. To increase the electric current, it may be possible to stack a plurality of layers having armature windings formed thereon by photoetching with insulating materials interposed therebetween, which, however, makes it difficult to electrically connect the central end of the armature winding in the helical pattern. Thus, because it is difficult to apply the armature winding on the stator disk, practical general use of the disk-type motor has not been actually realized.

DISCLOSURE OF THE INVENTION

The present invention provides an electric synchronous motor having a disk-like rotor element and a disk-like stator element arranged alternatingly in the direction of axis of the motor, said disk-like stator element having a helically extending armature winding secured thereon substantially perpendicularly to the surface of the stator, characterized in that said armature winding comprises a first winding element formed in a certain helical shape and a second winding element formed in a helical shape complementary to the helical shape of the first winding element, each of these winding elements being arranged mutually in the groove portion of the other winding element. Said first and second winding elements can be obtained by press forming, respectively.

BRIEF DESCRIPTION OF THE DRAWINGS

Fig. 1 is a plan view of winding elements formed according to the present invention;

Fig. 2 is a plan view of a winding layer formed by circumferentially arranging the winding elements in Fig. 1;

Fig. 3 is a view illustrating a winding unit obtained by the winding layers in Fig. 2;

Fig. 4 is a cross sectional view of an electric synchronous motor according to the present invention;

Fig. 5 is a circuit diagram formed by the windings;

Fig. 6 is an enlarged view of the bridge in Fig. 2;

Fig. 7 is a view illustrating an electric connection using the bridge of Fig. 6; and

Fig. 8 is a perspective view of an electron beam welding device for interconnecting the internal ends of the windings.

BEST MODE FOR CARRYING OUT THE INVENTION

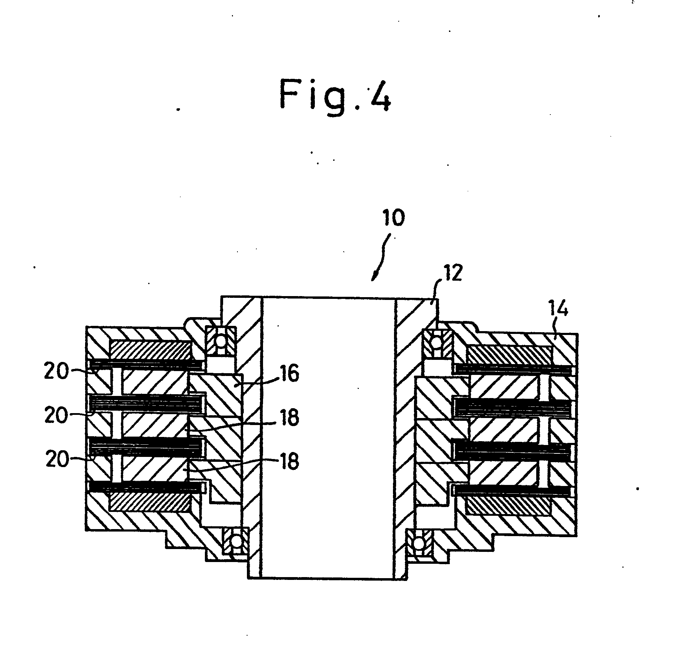

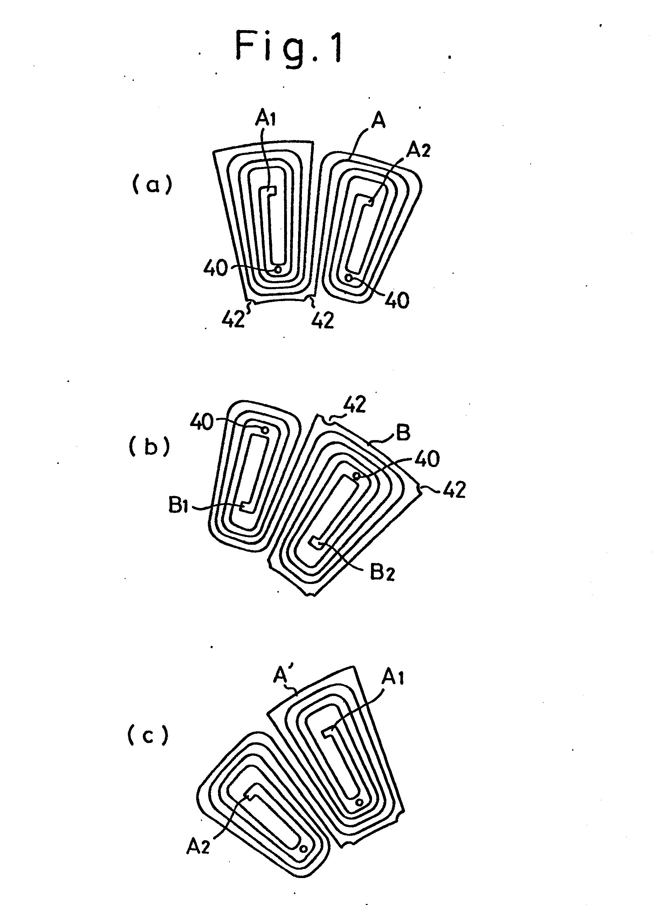

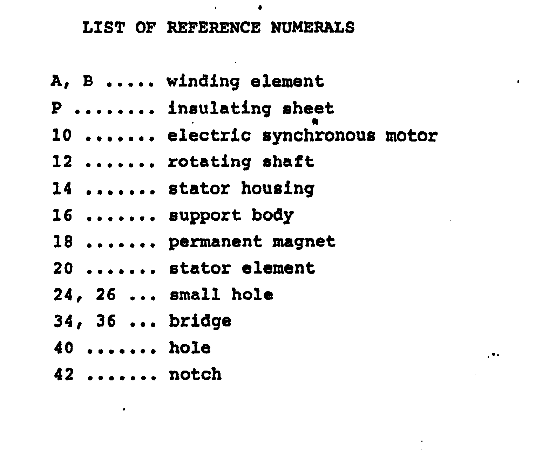

With initial reference to Fig. 4, 10 designates an electric synchronous motor according to the present invention, 12 designates a rotating shaft thereof, and 14 designates a stator housing. Disk-like permanent magnets 18 are mounted on the rotating shaft 12 via non-magnetic supports 16. Permanent magnets 18 are magnetized so that the magnetic field is formed in the direction parallel to the axis of the motor 10. Disk-like stator elements 20 are secured in the stator housing 14. Stator elements 20 and permanent magnets 18 are alternatingly arranged in the direction of the axis of the motor 10, so that the electric current flowing through the armature windings secured on the stator elements 20 in the radial direction from the axis of the motor crosses the above-described magnetic field to create the relative rotating force between the permanent magnets 18 and stator elements 20.

The armature windings secured on the stator elements 20 will now be described.

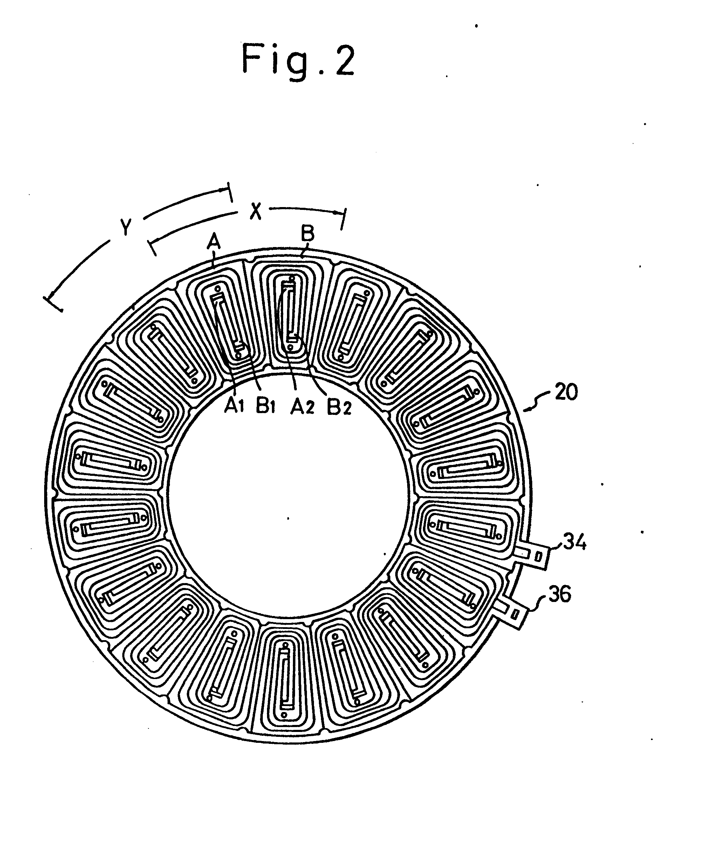

As shown in Fig. 1, the armature winding comprises a first winding element A (Fig. 1 (a)) made in a predetermined helical shape and a second winding element B (Fig. 1 (b)) made in a predetermined helical shape complementary to the helical shape of the first winding element A. Both the first winding element A and the second winding element B are obtained by pressing a copper plate, the second winding element B substantially corresponding to the blanked waste during pressing of the first winding element A. However, the first winding element A and the second winding element B are obtained by pressing separately, thus they fundamentally differ from the blanked waste. The first winding element A and the second winding element B have complementary shapes to each other, and each of these elements A and B can be located in the groove portion in the helical of the other of these elements A and B, as shown in Fig. 2, and accordingly, the first winding element A and the second winding element B can be superimposed in a most dense fashion on the same plane. Both elements A and B are initially pressed in such a dimension as to have a minute clearance between the thus superimposed elements A and B so that they are not in contact with each other. It is advantageous to make the elements A and B separately to maintain the above-described minute clearance. This is why, even if it is desired to increase the density of the helical by one press operation, a groove is formed at least corresponding to the blanked waste portion and there is a limit to the reduction of the width of the groove during a usual press operation; if the separately manufactured elements are superimposed, the above-described clearance can be smaller than the width of the groove of the helical formed by one press operation.

The first winding element A comprises two helical components (two pitches), these two helical components make helixes in the same outward direction from the

respective inner ends $A_1$ and $A_2$ and the outermost portions thereof are interconnected. Further, the second winding element B also comprises two helical components, with inner ends $B_1$ and $B_2$ and the outermost portions thereof are interconnected. However, the direction of the helix of the second winding element B is the reversed of that of the first winding element A.

One block consisting of the superimposed both winding elements A and B is shown by the arrow X in Fig. 2, and, to form the stator element 20, such blocks X are radially arranged on a plane so as to form a circle, as shown in Fig. 2.

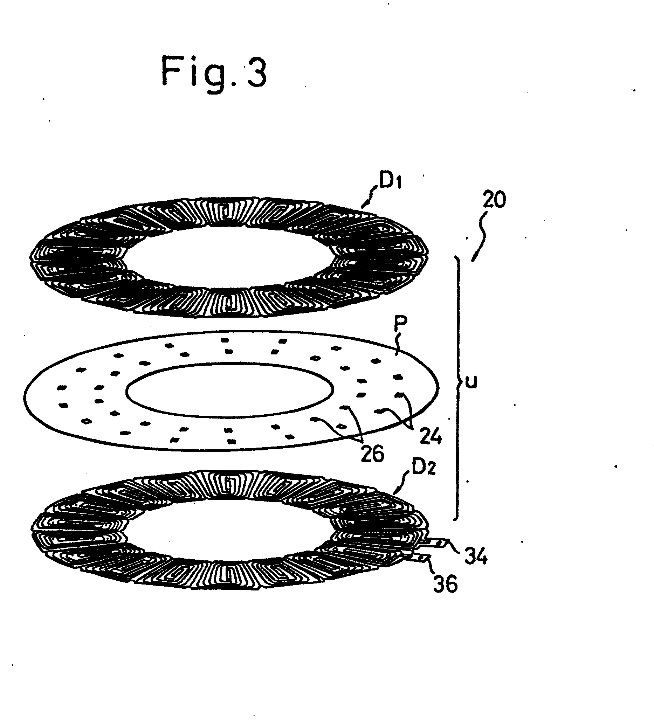

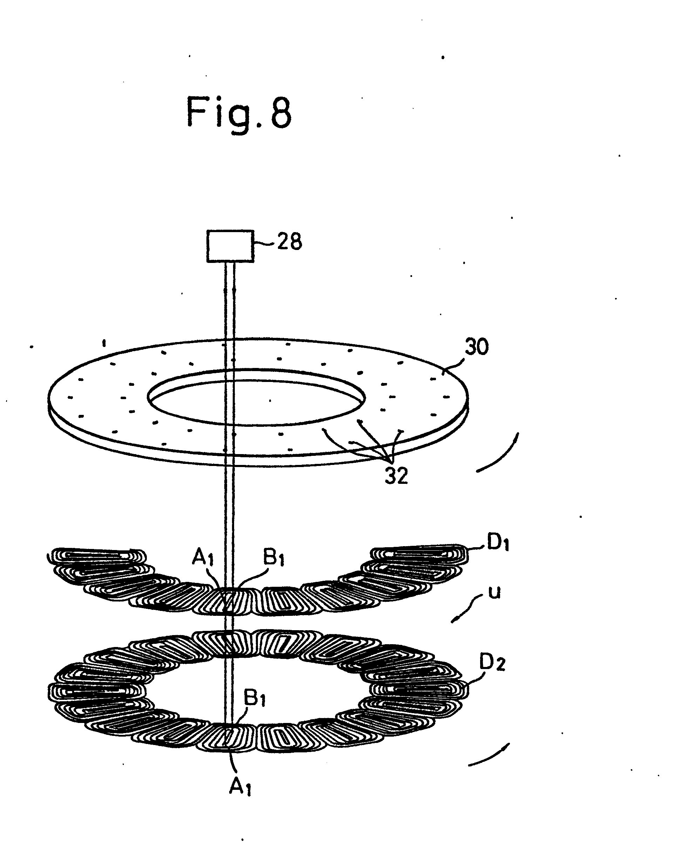

Two layers of the thus radially arranged armature windings are first prepared. Referring to Fig. 3, an insulating and heat sealable plastic sheet P is inserted between the thus prepared two layers $D_1$ and $D_2$ , and the two layers $D_1$ and $D_2$ are heat sealed on the upper and lower surfaces of the insulating sheet P, respectively. Thus the unit $\underline{u}$ having armature winding layers $D_1$ and $D_2$ on either surface of the insulating sheet P is formed. Further, the insulating sheet P has a plurality of small holes 24 and 26 preshaped through the upper and lower surfaces of the sheet, the arrangement of the small holes 24 and 26 being such that they correspond to the positions occupied by each inner end $A_1$ , $A_2$ , $B_1$ , and $B_2$ of each winding element A and B when they are arranged radially as shown in Fig. 2. Therefore, the upper and lower winding elements A and B are electrically connected to each other by joining the inner ends $A_1$ , $A_2$ , $B_1$ and $B_2$ thereof. An electron beam welding is utilized for this adjoinment, and the electron beam welding device such as shown in Fig. 8 is used. The electron beam welding device comprises a fixed electron beam emitting source 28 and a means for rotatably supporting the unit $\underline{u}$ (the insulating sheet P is deleted in Fig. 8) obtained as above-stated about the center axis (not shown). A jig 30 is mounted on that supporting means, which is rotatable together with the unit $\underline{u}$. The jig 30 has holes 32 arranged similarly to the holes 24 and 26 of the insulating sheet P. Accordingly, by rotating the unit $\underline{u}$ synchronous by with the jig 30, the beam emitted from the fixed beam source 28 can join the inner ends $A_1$ , $A_2$ , $B_1$ and $B_2$ of the upper and lower element A and B of the unit $\underline{u}$ relative to each other. In Fig. 8, the inner end $A_1$ $(B_1)$ of the layer $D_1$ and the inner end $A_1$ $(B_1)$ of the layer $D_2$ are welded together and the other inner ends on the same circle on which the inner ends $A_1$ and $B_1$ locate are sequentially connected.

Returning to Fig. 3, while the two layers $D_1$ and $D_2$ are constituted by layers of the exactly same arrangement such as shown in Fig. 2, they are stacked in a back-to-back relationship and offset by one pitch from one another. The winding element A' in Fig. 1 (c) corresponds to the winding element A in Fig. 1 (a) as viewed from the back thereof. The arrangement of the layers $D_1$ and $D_2$ stacked in a back-to-back relationship and offset by one pitch means that, typically with regard to the winding element A, the inner end $A_1$ of the winding element A is stacked on the inner end $A_1$ of the winding element A' via the insulation sheet P, with the small hole 24 of the insulation sheet P located at the stack point of the inner ends $A_1$. The disposition of the winding element A' offset by one pitch is shown by the arrow Y in Fig. 2. In this manner, within the unit $\underline{u}$, the inner end $A_1$ of the first winding element A is connected to the inner end $A_1$ of the first winding element A' at the back, the other inner end $A_2$ of the first winding element A' being connected to the inner end $A_2$ of a first winding element A which is located adjacent to the first winding element A indicated by the X in Fig. 2. By sequentially connecting the inner ends $A_1$ and $A_2$ , a closed circuit is completed solely by the first winding elements A and A' in the unit $\underline{u}$. This

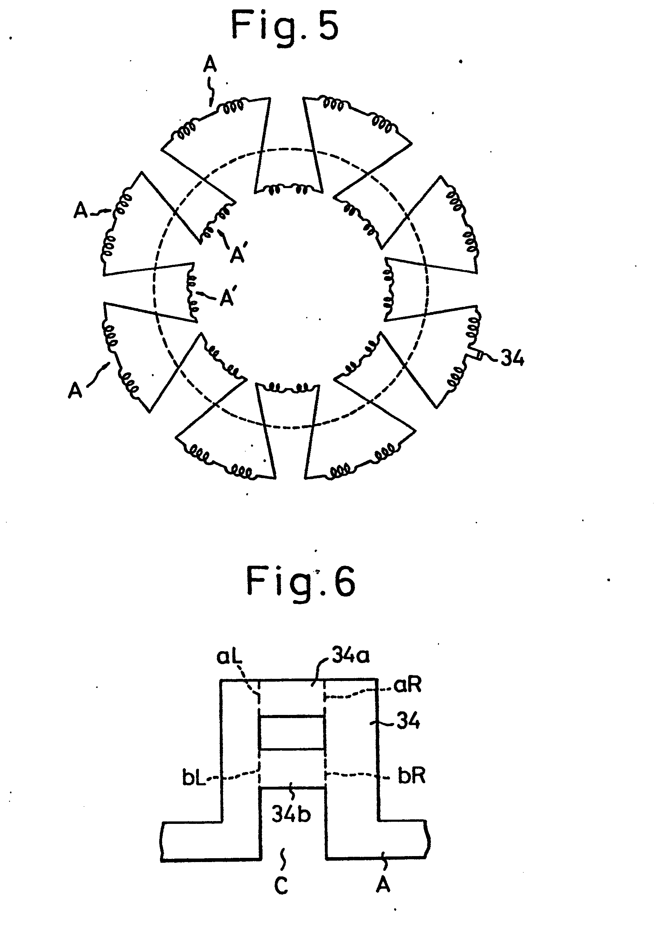

also applies to the second winding elements B, which define closed circuit independently of the closed circuit of the first winding element A. Figure 5 schematically shows the above-described electric connection regarding the first winding elements A.

To electrically connect the thus formed unit u to an outside power source, one of the first and second winding elements A and B comprises a bridge 34 or 36, respectively. The bridges 34 and 36 are shown in Figs. 2 and 3, and Fig. 6 shows the bridge 34 in greater scale. The bridge 34 projects radially outwardly from the outermost portion of the helix of the first winding element A in the same plane as the first winding element A, and comprises two parallel horizontal connecting portions (bridges) 34a and 34b. The bridges 34a and 34b are severed at the diagonal ends near the bases of the bridges (for example, aL and bR, or aR and bL) after the formation of the unit u, and electrically connected to another unit u. The bridge 34 is integrally shaped with the winding element A. By keeping the bridge 34 unsevered at least up to the formation of the unit u, it is possible to provide rigidity to the winding element A and the unit u. If the bridge 34 or the outermost portion of the helix of the winding element A is pre-severed, the winding element A is discontinued at the severed point (for example, point C) so that it easily fluctuates to become disadvantageous when, for example, locating the elements.

The unit u formed as shown in Fig. 3 is of the totally very thin planar sheet-like structure. To obtain an electric motor having a relatively large output power, it is recommended that a plurality of the above-stated units u be stacked via insulating materials. As described previously, each unit u is formed in a thin planar sheet-like structure, has armature windings arranged in the most dense helical shape, and has the terminal prepared as an outwardly extending bridge 34 for connecting the outside power source, and thus it is possible to obtain a small size electric motor through which a large electric current can flow.

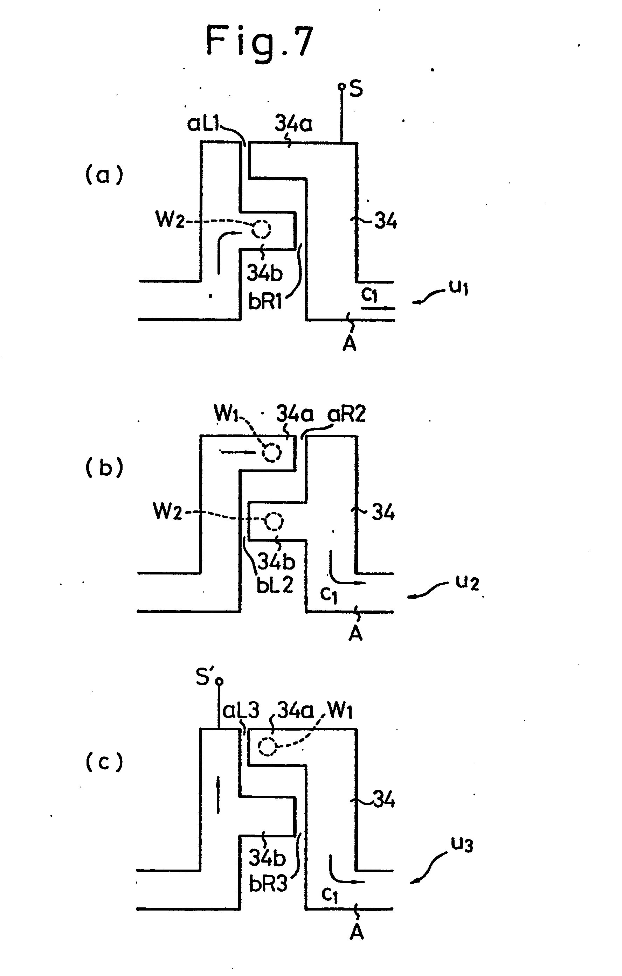

To effect the electrical connection using the bridges 34 after this stack work, it is preferable to carry out electron beam welding at the bridge portion 34a or 34b of the bridge 34. Regarding the electron beam welding, there is a known technique by which only the upper two layers in the plurality of layers of the stacked layers can be connected but the upper third layer is not joined to the second layer. In this case, it is preferable to alternatingly sever the bridge portion 34a or 34b of the bridge 34 for every unit $\underline{u}$, as described hereafter. Referring to Fig. 7, an example in which there units $\underline{u}$ are stacked is described. It is supposed that the unit $u_1$ in Fig. 7 (a) is the upper layer in the stack, the unit $u_2$ in Fig. 7 (b) is the middle layer, and the unit $u_3$ in Fig. 7 (c) is the lower layer. First, the unit $u_3$ is placed on a support table and the bridge portion 34a and 34b are severed at the ends aL3 and bR3 thereof on the diagonal line. Next, the unit $u_2$ is placed on that unit $u_3$ through the insulating sheet and the bridge portion 34a and 34b of the unit $u_2$ are severed at the ends aR2 and bL2 opposite to those of the unit $u_3$. Then, the bridges 34a of the double layered units $u_2$ and $u_3$ are joined by applying the electron beam at the central portion $W_1$ of one of the stacked bridges 34a. Next, the unit $u_1$ is placed on that unit $u_2$ through the insulating sheet and the bridge portion 34a and 34b of the unit $u_1$ are severed at the ends aL1 and bR2 opposite to those of the unit $u_3$. Then, the electron beam is applied from above the triple layered unit $u_1$, $u_2$ and $u_3$ to the central portion $W_2$ of the bridge portion 34b opposite to the previously adjoined bridge portion 34a. It is possible to adjust the energy of the electron beam enough to join just the two layers, so that the upper two layers only are actually joined and the bridge portion 34b of the lowest unit $u_3$ is not joined even if the electron beam is applied to the triple layered bridge portion 34b. In this case, the insulating sheet to be interposed has a hole at a position corresponding to the above stated joining point to enable the above-stated welding. This adjoinment is not restricted to three layers but can be appled to more than three layers. Finally, both the terminals S and S' are connected to the bridge portion 34a of the upper layer and the bridge portion 34b of the lower layer, respectively. Upon supplying the electric current from the source, if the direction of the electric current is clockwise as shown by the arrow $c_1$ in Fig. 7 (a), that electric current flows around the unit $u_1$ and reaches the bridge portion 34b of the unit $u_1$, and since the bridge portion 34b of the unit $u_1$ is joined to the bridge portion 34b of the unit $u_2$ and since the bridge portion 34b of the unit $u_2$ is severed on the left side from the adjoining point $W_2$, the electric current also flows in the clockwise direction in the unit $u_2$, similar to the unit $u_1$, flows around the unit $u_2$ and reaches the bridge portion 34a. Since the bridge portion 34a of the unit $u_2$ is joined to the bridge portion 34a of the unit $u_3$ and since the bridge portion 34a of the unit $u_3$ is severed on the left side from the adjoining point $W_1$, the electric current also flows in the clockwise direction in the unit $u_3$. In this way, the electric current flows in the same direction through all of the stacked units $u_1$, $u_2$ and $u_3$. This is accomplished by alternating the severing portion and joining of the bridge 34, and provides reliable control of the electric motor, since the electric current flows in the same way through all of the stacked units relative to the disposition of the magnetic pole formed by the permanent magnets.

Further, the above-described example of stacked layers is directed to only one phase part of the motor, and, in the case of the three phase motor, it is necessary to have three sets of windings, each of which is constituted by, for example, three units $u_1$, $u_2$ and $u_3$. In this case, a total of nine units are stacked. Each of the thus stacked units $\underline{u}$ is finally molded as a hard assembly into and covered by an insulating plastic to constitute a stator element 20.

As described previously, the first winding element A and the second winding element B complimentary to each other are arranged so that there is a slight clearance therebetween to avoid mutual contact. Also, the inner end $A_1$, $A_2$, $B_1$ or $B_2$ of each winding element A or B must be positioned so that they exactly correspond to the small hole 24 or 26 formed in the interposed insulating sheet P. To ensure the relative locationing of the winding elements A and B and the insulating sheet P during the formation of the unit u, each winding element A or B has a location means provided thereon. That is, as shown in Fig. 1, each winding element A or B has holes 40 and notches 42 provided thereon to receive locating pins (not shown). Upon forming the unit u, each upper winding element A and lower winding element B on the insulating sheet P are arranged, as previously described, in a back-to-back relationship and offset by one pitch. Accordingly, it is preferred for the holes 40 and notches 42 to have a symmetry relative to the center line of the magnetic pole pitch, so that the locating holes 40 as well as the inner ends $A_1$, $A_2$, $B_1$ and $B_2$ are on the pitch center line. Locating notches 42 are located on the outermost peripheral portion of one of the two helixes having that outermost peripheral portion and are at symmetrical positions on the either side of said pitch center line. Preferably, to ensure that identification of the first winding element A and the second winding element B, the notches 42 of the first winding element A are on the inner peripheral when assembled circumferentially, and conversely, the notches 42 of the second winding element B are on the outer periphery.

INDUSTRIAL APPLICABILITY

With the above-described arrangement, it is possible to obtain an electric synchronous motor having a small size but a large output power, because the density of the electric conductor in each layer is very high and a multiplicity of such layers can be stacked to enable a large electric current to be supplied. Such an electric synchronous motor can be applied in various industries.

## CLAIMS

1. An electric synchronous motor having a disk-like rotor element and a disk-like stator element arranged alternatingly in the direction of axis of the motor, said disk-like stator element having a helically extending armature winding secured thereon substantially perpendicular to the surface of the stator, characterized in that said armature winding comprises a first winding element formed in a certain helical shape and a second winding element formed in a helical shape complementary to the helical shape of the first winding element, each of these winding elements being arranged mutually in the groove portion of the other winding element.

2. An electric synchronous motor according to claim 1, wherein said first and second winding elements have locating means provided thereon to enable said first and second winding elements to be assembled in a predetermined positional relationship.

3. An electric synchronous motor according to claim 2, wherein said locating means comprises a hole or a notch to receive a locating pin.

4. An electric synchronous motor according to claim 3, wherein said locating means is provided at a symmetrical position relative to the center of the helix.

5. An electric synchronous motor according to claim 1, wherein each of said first and second winding elements comprises two pitch helixes, these two pitch helixes having outermost portions continuous to each other and inner ends, respectively.

6. An electric synchronous motor according to claim 5, wherein a plurality of combinations consisting of said first and second winding elements are circumferentially arranged so as to form a planar layer.

7. An electric synchronous motor according to claim 6, wherein a plurality of said planar layers formed by combinations consisting of said first and second winding elements are stacked via an insulating layer to form a unit.

8. An electric synchronous motor according to claim 7, wherein said planar layers formed by combinations consisting of said first and second winding elements are stacked in a back-to-back relationship and offset by one pitch, the inner ends of each of the stacked winding elements being electrically interconnected.

9. An electric synchronous motor according to claim 8, wherein at least one of the winding elements has a radially outwardly projecting bridge, said bridge forming terminals to be connected to an outside power source by severing the bridge.

0207996

2/8

# Fig.2

# Fig.3

Fig.4

$\frac{1}{8}$

# Fig.1

(a)

(b)

(c)

# Fig. 5

A

A

A'

A'

A

34

# Fig. 6

aL

34a

aR

34

bL

bR

34b

C

A

# Fig.7

(a)

aL1   34a   S

W2   34

34b
bR1   $c_1$   $u_1$

A

(b)

W1   34a   aR2

34

W2   34

34b
bL2   $c_1$   $u_2$

A

(c)

S'

aL3   34a   W1

34

34b
bR3   $c_1$   $u_3$

A

# Fig. 8

0207996

## LIST OF REFERENCE NUMERALS

A, B ..... winding element
P ........ insulating sheet
10 ....... electric synchronous motor
12 ....... rotating shaft
14 ....... stator housing
16 ....... support body
18 ....... permanent magnet
20 ....... stator element
24, 26 ... small hole
34, 36 ... bridge
40 ....... hole
42 ....... notch

# INTERNATIONAL SEARCH REPORT

0207996

International Application No   PCT/JP85/00711

**I. CLASSIFICATION OF SUBJECT MATTER** (if several classification symbols apply, indicate all)

According to International Patent Classification (IPC) or to both National Classification and IPC

Int.Cl$^4$   H02K3/26, 15/04, 21/24

**II. FIELDS SEARCHED**

| Minimum Documentation Searched | |
|---|---|
| Classification System | Classification Symbols |
| IPC | H02K3/00-3/28, 15/00-15/06, 21/24 |

Documentation Searched other than Minimum Documentation
to the Extent that such Documents are Included in the Fields Searched

| | |
|---|---|
| Jitsuyo Shinan Koho | 1926 - 1985 |
| Kokai Jitsuyo Shinan Koho | 1971 - 1985 |

**III. DOCUMENTS CONSIDERED TO BE RELEVANT**

| Category* | Citation of Document, with indication, where appropriate, of the relevant passages | Relevant to Claim No |
|---|---|---|
| X,Y | JP, A, 59-32347 (Matsushita Electric Works, Ltd.) 21 February 1984 (21. 02. 84) (Family: none) | 1, 5-8 |
| Y | JP, Y1, 49-9921 (Matsushita Electric Industrial Co., Ltd.) 9 March 1974 (09. 03. 74) (Family: none) | 5 - 7 |
| Y | JP, U, 51-90001 (Hitachi Maxell, Ltd.) 19 July 1976 (19. 07. 76) (Family: none) | 8 |
| A | JP, A, 57-68637 (Hitachi, Ltd.) 27 April 1982 (27. 04. 82) (Family: none) | 2 - 4 |

\* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| March 25, 1986 (25. 03. 86) | April 7, 1986 (07. 04. 86) |
| International Searching Authority | Signature of Authorized Officer |
| Japanese Patent Office | |

Form PCT/ISA/210 (second sheet) (October 1981)